# EUROPEAN PATENT SPECIFICATION

(11) **EP 3 261 964 B1**
(45) Date of publication and mention of the grant of the patent: **03.07.2019**
(21) Application number: 15841099.3
(22) Date of filing: 18.12.2015
(51) Int. Cl.: B65G 69/28

(54) **DOCK LEVELER WITH ROLLING COVER, DOCKING STATION AND DISTRIBUTION CENTER PROVIDED THEREWITH AND METHOD THERE FOR**
LADEBRÜCKE MIT ROLLABDECKUNG, ANDOCKSTATION UND VERTEILUNGSZENTRALE DAMIT SOWIE VERFAHREN DAFÜR
NIVELEUR DE QUAI À RECOUVREMENT ROULANT, POSTE D'ACCOSTAGE ET CENTRE DE DISTRIBUTION ÉQUIPÉ DE CELUI-CI, AINSI QUE PROCÉDÉ ASSOCIÉ

(30) Priority: 23.02.2015 NL 2014338
(43) Date of publication of application: 03.01.2018
(73) Proprietor: STERTIL B.V., 9288 CA Kootstertille (NL)
(72) Inventor: FIJNVANDRAAT, Jan Willem, 8935 DB Leeuwarden (NL)
(74) Representative: Verdijck, Gerardus
(86) International application number: PCT/NL2015/050884
(87) International publication number: WO 2016/137315

(56) References cited:
- EP-A1- 2 505 531
- DE-U1- 29 517 974
- US-A1- 2013 167 310

## Description

The present invention relates to a dock leveler for a docking station. Such docking station is often part of a distribution center that is configured to receive a truck or a trailer for loading and/or unloading loads/goods including packages, parcels, consumable materials and finished products.

Conventional dock levelers are mostly provided in a pit of the docking station structure and are configured to receive (heavy) loads, for example a fork lift truck for moving loads in and out of a truck. Such conventional dock leveler is disclosed in WO 98/21133 that specifically discloses a pneumatically driven loading bridge. To position a dock leveler correctly relative to a truck, firstly the platform of the dock leveler is moved upward and, secondly an extending part is moved out. Such extending part comprises plates sliding over each other. Conventional dock levelers are specifically made for a specific pit structure. This requires a dedicated design of the dock leveler. This renders the conventional dock levelers relatively expensive to design, manufacture and/or install in a docking station.

DE 295 17 974 U1 discloses a leveler for loading and/or unloading pallets into and/or out of a truck using chains that engage the pallets, this document discloses a dock leveler according to the preamble of claim 1.

An object of the present invention is to obviate or at least reduce some of the above problems and to provide a flexible and cost effective dock leveler.

This object is achieved with a dock leveler for a docking station according to claim 1.

The dock leveler according to the invention is configured for enabling moving goods in and out of a truck or trailer. For example, such load movements can be performed with a fork lift truck. The dock leveler can be installed in a docking station, also referred to as a dock or a dock house, and in combination with a dock shelter.

Providing a rolling cover with cover elements and a cover drive enables movement of the cover relative to the frame. The cover elements form the platform cover capable of carrying the loads and allowing for the vehicles, such as a fork lift truck, to drive over the cover. By providing the rolling cover as extension mechanism the dock leveler can be extended to contact the truck that is parked at the dock, and can be retracted again. The rolling cover obviates the need for plates that move relative to each other. Furthermore, the use of a rolling cover obviates the need for an additional structure configured for enabling relative movement of the (cover) plates, in fact the rolling cover elements enable an effective extending and retracting of the platform.

When the dock leveler according to the invention has to be brought from the retracted rest position to its use position, the platform is moved relative to the frame, preferably by performing a rotating movement around a hinge that connects the platform to the frame. After this upward lifting of the platform by the lifting means, the cover of the platform can be extended by rolling movement of the cover elements with a cover drive. For example, the lifting means may include a hydraulic, electric or pneumatic cylinder. In a presently preferred embodiment, the cover drive comprises a rack and pinion mechanism. It will be understood that other cover drives can also be envisaged, including electric, hydraulic and pneumatic drives. One of the advantages of the rolling cover according to the present invention is that it enables a nearly infinitely small stroke for extension of the cover. This enables an effective connection to the truck or trailer for the transfer of goods.

Providing rolling cover elements that are preferably hingedly connected to each other enables a flexible and relatively simple extension of the cover of the platform cover. Furthermore, the dimensions of the dock leveler can in a relatively easy manner be brought into conformity with the dimensions of the docking station, such as that of the pit structure housing the dock leveler. In addition, the maximum extension length of the dock leveler according to the invention can be easily adapted by changing the number of cover elements. The width of the dock leveler, and specifically the width of the cover thereof, can easily be adapted to the specifications by changing the width of the cover elements. Optionally, this can even be done when installing the dock leveler into an existing pit structure, thereby rendering the dock leveler according to the present invention useful for both newly built docking stations at distribution centers, and for so-called retro-fit applications. These retro-fit applications involve installing the dock leveler according to the present invention in existing docking stations and distribution centers. This provides additional flexibility for installation of the dock leveler according to the present invention.

In the presently preferred embodiment according to the present invention, the cover elements comprise a light-weight material.

By providing the cover elements from a light-weight material, in a presently preferred embodiment aluminum, the dock leveler, and particularly its platform, is of a relatively light-weight structure. This reduces transport and handling costs and renders installation of the dock leveler easier. In addition, the covers of the light-weight material can be provided with the desired dimensions easily, for example by sawing or cutting the cover element at the desired dimensions.

According to the invention, the connection of adjacent cover elements to each other comprises a hinge mechanism. This mechanism may comprise a sound reduction element for reducing the sound production when retracting or extending the cover. Such sound reducing element can be made of polyethylene, for example.

According to the present invention, the dock leveler further comprises guiding elements configured for guiding movement of the cover elements.

By providing guiding elements, the cover elements are guided when being moved from a retracted position to an extended position and vice versa. This achieves a controlled movement of the cover elements.

Preferably, the guiding elements are hingedly connected to the frame. This further enhances guiding movement of the cover elements in any position of the dock leveler. Furthermore, by connecting the guiding elements to the frame, the dock leveler according to the invention is also available for so-called retro-fit applications placing a new dock leveler into an existing structure. Furthermore, connecting guiding elements to the frame of the dock leveler reduces the constraints and required modifications for an existing structure and renders the dock leveler feasible also in such retro-fit application. The guides can be made of aluminum, stainless steel, plastic or any other suitable material.

In a presently preferred embodiment according to the present invention, the dock leveler comprises a transition element at or near the end of the platform that is hingedly connected to the frame.

Providing a transition element at or near the end of the platform that is hingedly connected to the frame prevents the introduction of an undesired step, edge or groove at this end, or at least a reduction thereof. This renders transport of goods over the dock leveler more comfortable and/or reduces the risk of goods falling off a fork lift truck when being transported, for example.

In a further preferred embodiment according to the present invention, the dock leveler comprises one or more nozzles configured for cleaning the cover elements.

By providing one or more nozzles, the cover elements can be cleaned when extending or retracting. The nozzles can provide air or another gas and/or a liquid for cleaning purposes. In a presently preferred embodiment, the nozzles are provided near the hinge connecting the platform to the frame. In such presently preferred embodiment, the cover elements follow a curved track or curved trajectory when extending or retracting, such that adjacent cover elements rotate relative to each other around a connecting axis or shaft, and can be cleaned more easily. In a presently preferred embodiment the transition element is removable from the dock leveler and/or hingedly connected thereto to enable cleaning.

In a further presently preferred embodiment according to the present invention, the cover elements comprise grooves in substantially a longitudinal and/or width direction of the leveler.

By providing grooves in the cover elements, a vehicle, such as a fork lift truck, can maneuver more effectively and safely over the platform.

In an example not part of the present invention, the floor of the pit structure is put at an angle relative to the horizontal. In case the nozzle sprays a cleaning liquid, such liquid can easily be removed from the dock leveler and/or pit structure comprising such dock leveler.

In a further preferred embodiment according to the present invention, the dock leveler comprises a lip on the front end of the platform.

By providing a lip, preferably with an inclined surface in the range of 0 - 10°, preferably 3 - 7°, the transition between platform cover and truck or trailer is smoothened. This improves the transition of goods and comfort of a vehicle driver and, in addition, reduces the risk of goods falling off the vehicle, such as a fork lift truck.

In a further preferred embodiment according to the present invention, the dock leveler further comprises a sealing element configured for sealing the leveler against a vehicle at the docking station.

By providing the dock leveler with a sealing element, it is possible to improve the overall sealing of the indoor climate of the docking station and/or distribution station against the outside environment. This is especially relevant when handling cooled and/or frozen products, or handling goods under unfavorable ambient conditions. Providing the leveler with a sealing element provides an effective seal at a location that conventionally is difficult to seal, i.e. the transition between truck and dock at or close to the floor surface. Preferably, the lip of the dock leveler comprises such sealing element as the lip is in close vicinity of the truck or trailer.

In a presently preferred embodiment, the sealing element is inflatable. This enables effective positioning and maneuvering of the leveler platform relative to the vehicle, after which the sealing element can be inflated to effectively seal the dock climate from ambient conditions.

The invention also relates to a docking station and/or distribution center comprising a dock leveler as mentioned above.

Such docking station and/or distribution center provides the same effects and advantages as those mentioned for the dock leveler. Preferably, the docking station also provides a sealing element configured for sealing a platform with the effects a described in relation to the dock leveler. Furthermore, the docking station preferably comprises a dock shelter comprising a four-sided seal, including the sealing element provided in combination with the leveler. This provides an overall seal for sealing the docking station climate relative to ambient conditions.

The invention also relates to a method for loading and/or unloading goods and a method for providing a leveler as mentioned above in a docking station. The method for loading/unloading comprises the steps of providing a leveler as mentioned before, extending the rolling cover and rolling and/or loading goods. The method for providing the leveler comprises the steps of attaching the frame to the dock and assembling the rolling cover.

These methods provide the same effects and/or advantages as those stated with reference to the dock leveler and/or docking station.

Further advantages, features and details of the inventions are elucidated on the basis of preferred embodiments thereof, wherein reference is made to the accompanying drawings, in which:
- Figure 1 illustrates a docking station with a dock leveler according to the invention; and
- Figures 2-4 illustrate an embodiment of the dock leveler of Figure 1.

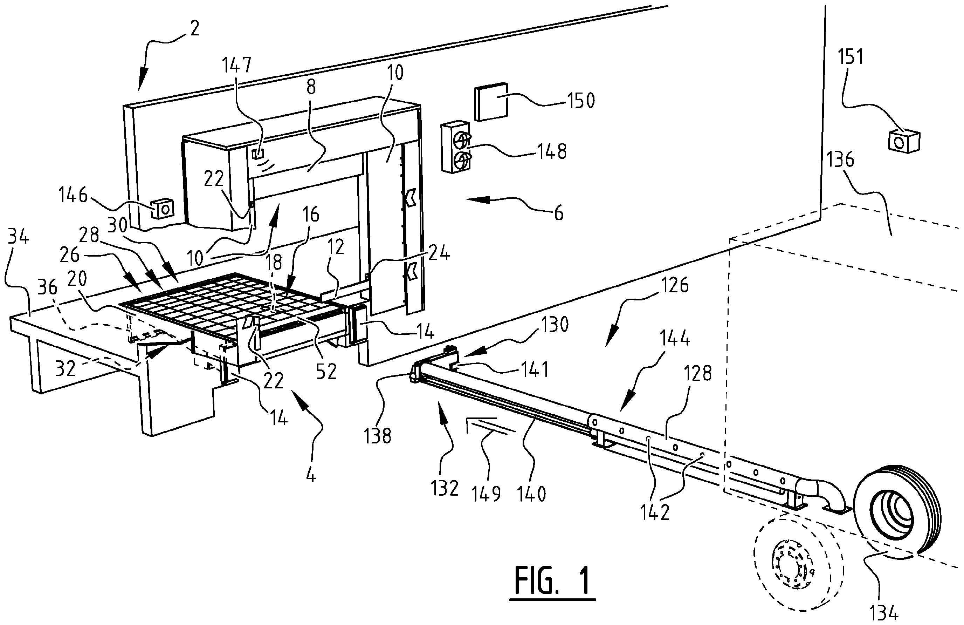

Distribution center 2 (Figure 1) comprises a number of docks or docking stations 4 that in the illustrated embodiment are provided with shelter 6, door 8, seals 10, barrier 12 and bumper 14. Dock 4 further comprises dock leveler 16. In the illustrated embodiment dock leveler 16 is provided with load cell 18 for measuring the loads that are loaded and/or unloaded, and position sensor 20 to measure the (angular) position of leveler 16. Door 8 is provided with one or more door position sensors 22 to detect the position of door 8. Barrier 12 is provided with status sensor 24.

Leveler 16 comprises cover 26 with grooves 28, 30 and is provided in pit 32. Pit 32 is provided in structure 34 of distribution center 2 and comprises pit structure 36.

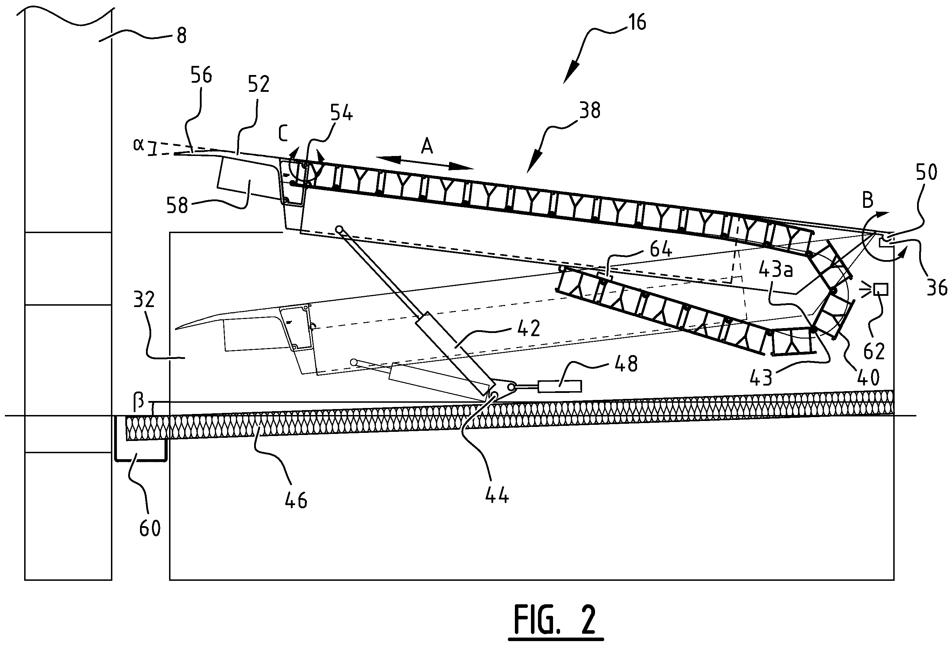

Leveler 16 (Figures 2-4) comprises platform or cover 38 comprising a number of cover elements 40. Adjacent cover elements 40 are hingedly connected with hinge 43 comprising a sound reducing element 43a. In a retracted state leveler 16 is substantially completely housed within pit 32. In a state of use cover 38 is pivotally positioned in an upward direction with the use of hydraulic cylinder 42 that is connected to pit 32 with connection 44, for example to pit floor 46. Cylinder 42 is controlled with hydraulic drive 48 or another drive type. Extending cylinder 42 moves platform 38 in an upward direction. In this upward direction, platform 38 rotates around hinge 50 of pit structure 36 in a direction B. Rolling cover 38 can be extended and/or retracted in a direction A. At the free end of cover 38 lip 52 is optionally connected with hinge 54 to cover 38 enabling rotation of lip 52 in a direction C. In a presently preferred embodiment lip 52 is fixated at a client-specific angle.

In the illustrated embodiment, front edge 56 is provided at an angle α to lip 52. At the downward oriented side of lip 52 there is provided an inflatable sealing block 58 that can be inflated after correctly positioning leveler 16 relative to a vehicle. Floor surface 46 is provided at an angle β relative to the horizontal and at its downward and there is provided drain 60. Below cover 38, there is provided a number of nozzles 62 for the purpose of cover elements 40. In the illustrated embodiment, the node cover element is provided with stop member 64, capable of blocking any further extension of cover 38, thereby maximizing the extension length. In the illustrated embodiment, cover elements 40 are made from aluminum.

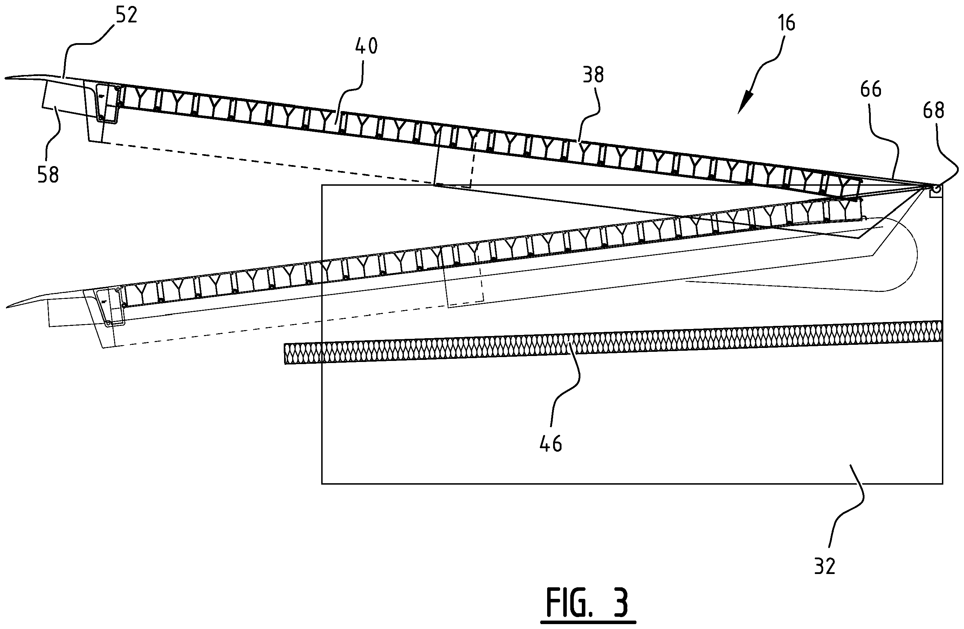

In the illustrated embodiment in a fully extended mode of dock leveler 16 (Figure 3), cover elements 40 are capable of carrying a load transport vehicle such as a fork lift truck. In the illustrated embodiment, transition plate 66 is hingedly connected to frame 36 of pit 32 with hinge 68, enabling cleaning of leveler 16.

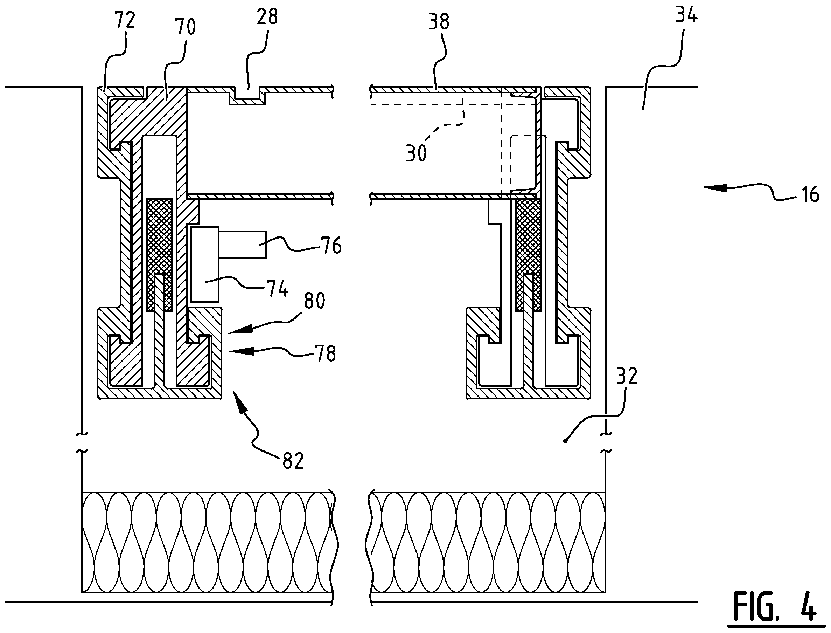

Side elements 70 (Figure 4) are connected to cover elements 38 and are guided by guide elements 72. Movement of rolling cover elements 40 is achieved with a rack and pinion drive 74 comprising motor 76. Additional guide elements 78 comprise guiding surface 80 provided on guide 72 and guiding surface 82 provided on cover side element 70, and assist in guiding movement of rolling cover 38.

In the illustrated embodiment, when positioning leveler 16, hydraulic cylinder 42 is extended and pivots cover 38 in a direction B. Next, rolling cover 38 is extended by drive 74 in direction A. Then, lip 52 is positioned with a pivoting movement in direction C. After positioning leveler 16, sealing element 58 can be inflated to seal dock 2.When extending rolling cover 38, nozzles 62 can be used for cleaning cover elements 40. After goods have been loaded and/or unloaded, leveler 16 is retracted, optionally involving movement of lip 52 in direction C. Retraction of leveler 16 involves retracting rolling cover 38 in direction A, followed by a retracting movement of leveler 16 in direction B.

When installing leveler 16 in dock 4, a new pit structure 32 is provided or an already available pit structure 32 is used. In a width direction cover elements 40 will be customized according to the specifications of pit structure 32, for example by sawing cover elements 40 in this direction at the appropriate dimensions. To adapt the extension possibilities for leveler 16, the number of cover elements 40 can be chosen to this specific requirement. This enables designing leveler 16 in a relatively simple manner using standardized elements.

In the illustrated embodiment, dock 4 (figure 1) is provided with optional locking system 126 that comprises guide track 128, carriage 130 that is guided by guide track 128 and is provided with locking means 132 for blocking wheel 134 of truck 136. Locking member 138 is provided on carriage 130 for releasable locking of carriage 130 relative to guide track 128. Locking system 126 further comprises displacing means 140 for displacing carriage 130, and locking system status sensor 141. LED lights 142 of truck docking assistance system 144 assist a driver of truck 136 when docking truck 136.

In the illustrated embodiment, assistance system 144 further comprises camera 146 for detecting truck positions, signaling light 148 for further assisting the driver of truck 136, and projector 147 for projecting signals, such as arrows 149, on the ground surface assisting the truck driver. Preferably, camera 151 is remotely controlled and used for identification/recognition of truck 136 when entering the premises of distribution center 2. After identifying truck 136 the driver is provided with a message or signals to direct truck 136 to the assigned dock 4. This significantly improves the docking process.

In addition to its preferred use in assistance system 144, camera 151 monitors part of the surroundings of dock 4 and/or monitors the dock area. Furthermore, camera 151 can be used to identify truck 136, in a presently preferred embodiment through number plate recognition. Alternatively, a separate camera system is provided for identification purposes. Optionally, camera 151 provides information about the type of vehicle, such as truck 136, enabling controller 150 to adjust the settings of dock components, such as leveler 16 and/or use vehicle specific information for debiting the user of dock 4 for the docking operation that is performed. Optionally, camera 151 detects the vehicle registration, for example by the license plates, optionally providing the relevant information to the accounting department such that the vehicle owner can be debited for the actual docking operation(s).

The present invention is by no means limited to the above described preferred embodiments thereof. The rights sought are defined by the following claims within the scope of which many modifications can be envisaged.

## Claims

1. Dock leveler (16) for a docking station (4), comprising:
- a frame;
- a platform that at one end is hingedly connected to the frame and comprising a cover (26,38); and
- lifting means connected to the platform for upward pivoting of the platform, **characterized in that** the cover of the platform comprises a rolling cover (38) with cover elements (40) and a cover drive (74), wherein the cover elements form the platform cover capable of carrying loads and allowing for vehicles to drive over the cover, wherein adjacent cover elements are connected with a hinge mechanism (43), and further comprising guiding elements (78) configured for guiding movement of the cover elements.

2. Dock leveler according to claim 1, wherein the cover elements comprise a light-weight material.

3. Dock leveler according to claim 2, wherein the light-weight material is aluminum.

4. Dock leveler according to claims 1, 2 or 3, wherein the hinge mechanism comprises a sound reducing element (43a).

5. Dock leveler according to one or more of the foregoing claims, wherein the guiding elements are hingedly connected to the frame.

6. Dock leveler according to one or more of the foregoing claims, further comprising a transition element (66) at or near an end of the platform that is hingedly connected to the frame.

7. Dock leveler according to one or more of the foregoing claims, further comprising one or more nozzles (62) configured for cleaning the cover elements.

8. Dock leveler according to one or more of the foregoing claims, wherein the cover elements comprise grooves (28) in substantially a longitudinal direction of the leveller, wherein the cover elements comprise grooves (30) in substantially a width direction of the leveler.

9. Dock leveler according to one or more of the foregoing claims, comprising a lip (52) on the front end of the platform, wherein the lip comprises an inclined surface in the range of 0-10° preferably 3-7°.

10. Dock leveler according to one or more of the foregoing claims, further comprising a sealing element (58) configured for sealing the leveler at a vehicle at the docking station, wherein the sealing element is preferably inflatable.

11. Docking station (4), comprising a dock leveler according to one or more of the foregoing claims.

12. Docking station according to claim 11, wherein the leveler comprises a sealing element (58) configured for sealing a platform on the downward oriented side, wherein the docking station preferably comprises a dock shelter that comprises a four-sided seal.

13. Distribution center (2) with one or more docking stations (4) according to claim 11 or 12 and/or dock levelers (16) according to one or more of the foregoing claims 1-10.

14. Method for loading and/or unloading goods, comprising the steps of:
- providing a dock leveler (16) according to one or more of the foregoing claims 1-10;
- extending the rolling cover (26,38); and
- loading and/or unloading goods.

15. Method for providing a dock leveler (16) in a docking station (4) in a dock, comprising the steps of :
- providing a dock leveler (16) according to one or more of the foregoing claims 1-10;
- attaching the frame to the dock; and
- assembling the rolling cover (26,38).

## Patentansprüche

1. Ladebrücke (16) für eine Andockstation (4), die aufweist:
- einen Rahmen;
- eine Plattform, die an einem Ende gelenkig mit dem Rahmen verbunden ist und eine Abdeckung (26, 38) aufweist; und
- Hebemittel, die mit der Plattform verbunden sind, um die Plattform nach oben zu schwenken,
**dadurch gekennzeichnet, dass**
die Abdeckung der Plattform eine Rollabdeckung (38) mit Abdeckungselementen (40) und einem Abdeckungsantrieb (74) aufweist, wobei die Abdeckungselemente die Plattformabdeckung bilden, die dazu ausgelegt ist, Lasten zu tragen und Fahrzeugen zu ermöglichen, über die Abdeckung zu fahren, wobei benachbarte Abdeckungselemente mit einem Gelenksmechanismus (43) verbunden sind, und weiterhin Führungselemente (78) aufweist, die dazu ausgestaltet sind, die Bewegung der Abdeckungselemente zuführen.

2. Ladebrücke nach Anspruch 1, wobei die Abdeckungselemente ein Leichtgewichtmaterial aufweisen.

3. Ladebrücke nach Anspruch 2, wobei das Leichtgewichtmaterial Aluminium ist.

4. Ladebrücke nach Anspruch 1, 2 oder 3, wobei der Gelenkmechanismus ein Geräuschreduzierungselement (43a) aufweist.

5. Ladebrücke nach einem oder mehreren der vorhergehenden Ansprüche, wobei die Führungselemente gelenkig mit dem Rahmen verbunden sind.

6. Ladebrücke nach einem oder mehreren der vorhergehenden Ansprüche, die weiterhin ein Übergangselement (66) an oder nahe einem Ende der Plattform aufweist, das gelenkig mit dem Rahmen verbunden ist.

7. Ladebrücke nach einem oder mehreren der vorhergehenden Ansprüche, die weiterhin eine oder mehrere Düsen (62) aufweist, die dazu ausgestaltet sind, die Abdeckungselemente zu reinigen.

8. Ladebrücke nach einem oder mehreren der vorhergehenden Ansprüche, wobei die Abdeckungselemente Nuten (28) in im Wesentlichen einer Längsrichtung der Ladebrücke aufweisen, wobei die Abdeckungselemente Nuten (30) in im Wesentlichen einer Breitenrichtung der Ladebrücke aufweisen.

9. Ladebrücke nach einem oder mehreren der vorhergehenden Ansprüche, die eine Lippe (52) an einem vorderen Ende der Plattform aufweisen, wobei die Lippe eine geneigte Fläche im Bereich von 0-10°, vorzugsweise 3-7° aufweist.

10. Ladebrücke nach einem oder mehreren der vorhergehenden Ansprüche, die weiterhin ein Abdichtungselement (58) aufweist, das dazu ausgestaltet ist, die Ladebrücke an einem Fahrzeug an der Andockstation abzudichten, wobei das Abdichtungselement vorzugsweise aufblasbar ist.

11. Andockstation (4), die eine Ladebrücke nach einem der vorhergehenden Ansprüche aufweist.

12. Andockstation nach Anspruch 11, wobei die Ladebrücke ein Abdichtungselement (58) aufweist, das dazu ausgestaltet ist, eine Plattform an der nach unten ausgerichteten Seite abzudichten, wobei die Andockstation vorzugsweise einen Andockschutz aufweist, der eine vierseitige Abdichtung aufweist.

13. Verteilungszentrale (2) mit einer oder mehreren Andockstation(en) (4) nach Anspruch 11 oder 12 und/oder Ladebrücken (16) nach einem oder mehreren der vorhergehenden Ansprüche 1 bis 10.

14. Verfahren zum Laden und/oder Entladen von Waren, das die Schritte aufweist: Vorsehen einer Ladebrücke (16) nach einem oder mehreren der vorhergehenden Ansprüche 1-10;
- Ausfahren der Rollabdeckung (26, 38); und
- Laden und/oder Entladen der Waren.

15. Verfahren zum Vorsehen einer Ladebrücke (60) in einer Andockstation (4) in einem Dock, das die Schritte aufweist:
- Vorsehen einer Ladebrücke (16) nach einem oder mehreren der vorhergehenden Ansprüche 1-10;
- Anbringen des Rahmens an dem Dock; und
- Montieren der Rollabdeckung (26, 38).

## Revendications

1. Niveleur de quai (16) pour un poste d'accostage (4), comprenant :
- un cadre ;
- une plateforme qui au niveau d'une extrémité s'articule sur le cadre et comprenant un recouvrement (26, 38) ; et
- des moyens de levage reliés à la plateforme pour le pivotement vers le haut de la plateforme,
**caractérisé en ce que** le recouvrement de la plateforme comprend un recouvrement roulant (38) avec des éléments de recouvrement (40) et un entraînement de recouvrement (74), dans lequel les éléments de recouvrement forment le recouvrement de plateforme capable de porter des charges et permettant à des véhicules de rouler sur le recouvrement, dans lequel des éléments de recouvrement adjacents sont reliés à un mécanisme d'articulation (43), et comprenant en outre des éléments de guidage (78) configurés pour guider le déplacement des éléments de recouvrement.

2. Niveleur de quai selon la revendication 1, dans lequel les éléments de recouvrement comprennent un matériau léger.

3. Niveleur de quai selon la revendication 2, dans lequel le matériau léger est de l'aluminium.

4. Niveleur de quai selon les revendications 1, 2 ou 3, dans lequel le mécanisme d'articulation comprend un élément de réduction sonore (43a).

5. Niveleur de quai selon une ou plusieurs des revendications précédentes, dans lequel les éléments de guidage s'articulent sur le cadre.

6. Niveleur de quai selon une ou plusieurs des revendications précédentes, comprenant en outre un élément de transition (66) au niveau ou près d'une extrémité de la plateforme qui s'articule sur le cadre.

7. Niveleur de quai selon une ou plusieurs des revendications précédentes, comprenant en outre une ou plusieurs buses (62) configurées pour nettoyer les éléments de recouvrement.

8. Niveleur de quai selon une ou plusieurs des revendications précédentes, dans lequel les éléments de recouvrement comprennent des rainures (28) sensiblement dans une direction longitudinale du niveleur, dans lequel les éléments de recouvrement comprennent des rainures (30) sensiblement dans une direction de largeur du niveleur.

9. Niveleur de quai selon une ou plusieurs des revendications précédentes, comprenant un rebord (52) sur l'extrémité avant de la plateforme, dans lequel le rebord comprend une surface inclinée dans la plage de 0-10°, de préférence de 3-7°.

10. Niveleur de quai selon une ou plusieurs des revendications précédentes, comprenant en outre un élément d'étanchéité (58) configuré pour rendre étanche le niveleur au niveau d'un véhicule au niveau du poste d'accostage, dans lequel l'élément d'étanchéité est de préférence gonflable.

11. Poste d'accostage (4), comprenant un niveleur de quai selon une ou plusieurs des revendications précédentes.

12. Poste d'accostage selon la revendication 11, dans lequel le niveleur comprend un élément d'étanchéité (58) configuré pour rendre étanche une plateforme sur le côté orienté vers le bas, dans lequel le poste d'accostage comprend de préférence un abri de quai qui comprend un joint à quatre côtés.

13. Centre de distribution (2) pourvu d'un ou de plusieurs postes d'accostage (4) selon la revendication 11 ou 12 et/ou de niveleurs de quai (16) selon une ou plusieurs des revendications précédentes 1-10.

14. Procédé de chargement et/ou déchargement de marchandises, comprenant les étapes de :
- fourniture d'un niveleur de quai (16) selon une ou plusieurs des revendications 1-10 ;
- extension du recouvrement roulant (26, 38) ; et
- chargement et/ou déchargement de marchandises.

15. Procédé pour fournir un niveleur de quai (16) dans un poste d'accostage (4) dans un quai, comprenant les étapes de :
- fourniture d'un niveleur de quai (16) selon une ou plusieurs des revendications précédentes 1-10 ;
- fixation du cadre au quai ; et
- assemblage du recouvrement roulant (26, 38).
